# FASCICULE DE BREVET EUROPEEN

(11) **EP 4 036 053 B1**
(45) Date de publication et mention de la délivrance du brevet: **16.04.2025**
(21) Numéro de dépôt: 22151269.2
(22) Date de dépôt: 13.01.2022
(51) Int. Cl.: B67D 1/08, B67D 1/12

(54) **MACHINE DE DISTRIBUTION DE BOISSON EQUIPÉE D'UN SYSTÈME DE MESURE DE LA QUANTITÉ DE BOISSON RESTANTE DANS UN CONTENANT**
GETRÄNKEAUSGABEAUTOMAT MIT EINEM SYSTEM ZUR MESSUNG DER IN EINEM BEHÄLTER VERBLEIBENDEN GETRÄNKEMENGE
MACHINE FOR DISPENSING A BEVERAGE PROVIDED WITH A SYSTEM FOR MEASURING THE AMOUNT OF BEVERAGE REMAINING IN A CONTAINER

(30) Priorité: 02.02.2021 FR 2100983
(43) Date de publication de la demande: 03.08.2022
(73) Titulaire: SEB S.A., 69130 Ecully (FR)
(72) Inventeur: MANSEAU, Charles, 21000 Dijon (FR); DUMOUX, Philippe, 21120 Gemeaux (FR)
(74) Mandataire: SEB Développement

(56) Documents cités:
- EP-A1- 3 722 251
- CN-U- 201 990 056
- US-A1- 2018 072 972
- US-A1- 2020 189 899
- US-B1- 9 296 603

## Description

### Domaine technique

La présente invention concerne une machine de distribution de boisson autonome qui comprend notamment des moyens de réception d'un contenant de boisson tel qu'un fût, des moyens de distribution de la boisson extraite du contenant et des moyens de mesure de la quantité de boisson restante dans le contenant.

Plus précisément, l'invention concerne une machine de distribution de boisson qui mesure la quantité de boisson restante dans le contenant en procédant à la pesée de cette machine dans laquelle est placé ledit contenant de boisson.

### Etat de la technique

L'Homme du métier des machines de distribution de boisson a depuis longtemps cherché à développer des solutions techniques lui permettant de connaître la quantité de boisson demeurant dans un contenant, par exemple de la bière contenue dans un fût. Cela lui permet notamment d'anticiper l'approvisionnement et le remplacement du contenant, avant d'être à court de boisson.

Par exemple, le brevet américain US 698,334 décrit une installation de distribution de boisson dans un bar, selon laquelle un tonneau de bière est positionné sur un plateau monté mobile sur quatre ressorts et un câble est fixé sur le côté inférieur du plateau et entraîne une poulie disposée en partie haute du bar à bière, ladite poulie étant solidaire d'un axe sur lequel est rapportée une aiguille qui est placée devant un cadran et informe le barman de la quantité de bière disponible dans le tonneau.

Diverses installations de mesure de la quantité de boisson restante dans un contenant ont ensuite été développées, lesquelles comportent des dispositifs permettant la pesée dudit contenant afin d'en déduire la quantité de boisson restante dans celui-ci, comme par exemple les dispositifs décrits dans les titres suivants : CA 1159855 ; DE 4224088 ; US 5,837,944 ; US 2005000737 ; US 7,255,003 ; CN 201990056 ; US 2018/072972 A1 et CN 102700840.

Le brevet canadien CA 1159855 décrit un dispositif pour peser un contenant de boisson tel qu'un fût à bière dans les lieux de consommation tels que les cafés ou bars. Le dispositif comprend un support muni d'une plateforme de réception du contenant de boisson, la plateforme étant située au-dessus d'une balance et pouvant pivoter entre une position inclinée pour distribuer la boisson et une position horizontale. Dans la position horizontale, la plateforme repose sur la balance et est libre de se déplacer vers le haut et le bas pour être correctement pesée avec ledit contenant.

La demande de brevet allemand DE 4224088 décrit un dispositif de surveillance et d'enregistrement dans les restaurants, des quantités de boissons distribuées à partir de plusieurs fûts de liquide. Un comptoir à distribution de boissons, en particulier des bières, comporte plusieurs fûts, chaque fût étant placé sur une plateforme individuelle qui repose sur une balance électronique dédiée. Chaque balance est reliée par un câble 11 à un microprocesseur, une interface homme/machine permettant d'entrer des données ou des instructions au microprocesseur, un afficheur et une imprimante complétant l'ensemble.

Le brevet américain US 5,837,944 décrit un dispositif destiné à mesurer et afficher la température et la quantité de boisson restant à l'intérieur d'un fût. Le dispositif comprend une balance électronique sur laquelle repose un fût de boisson et un thermomètre relié à l'intérieur d'un tuyau de distribution de boisson. Un afficheur numérique connecté à la balance et au thermomètre indique simultanément la température de la boisson et le nombre de doses de boisson disponible dans le fût.

La demande de brevet américain US 2005000737 décrit une balance spécialement conçue pour le pesage des fûts de bière dans un bar ou un restaurant, ladite balance étant capable de résister à des basses températures pour qu'une unité de réfrigération puisse refroidir la bière dans le fût en étant posé sur le plateau de la balance.

Le brevet américain US 7,255,003 décrit un dispositif pour mesurer et afficher la quantité de bière dans un fût, lequel est constitué d'une balance en forme de U agencée pour être placée sous une partie d'un rebord du fût et recevoir ladite partie du rebord qui repose sur le fond horizontal de la forme en U. Un afficheur est installé sur la branche externe de la forme en U et indique la quantité de bière restante dans le fût.

Le modèle d'utilité chinois CN201990056 décrit un châssis aménagé pour recevoir et peser un fût de boisson et afficher le poids mesuré de ce fût. Le châssis comporte quatre pieds comportant des roulettes, des capteurs de poids étant placés entre chaque pieds et le châssis. Un afficheur sur le châssis indique le poids du fût de boisson.

La demande de brevet chinois CN102700840 divulgue une tireuse à bière pression réfrigérée qui comporte des capteurs de poids permettant de peser le poids total de la tireuse. Lorsqu'un poids minimum est atteint, une unité de contrôle informe l'utilisateur.

A l'exception de la machine de distribution décrite dans la demande de brevet chinois CN102700840, les divers dispositifs précités permettant la pesée d'un ou plusieurs contenants ne sont pas conçus pour être mis sur une machine de distribution de boisson autonome, comprenant ses propres moyens de réception d'un contenant de boisson et ses propres moyens de distribution de la boisson extraite du contenant, le caractère autonome permettant de rendre ladite machine indépendante et de pouvoir facilement déplacer l'ensemble, par exemple pour la placer à divers endroits souhaités ou pour la stocker dans un lieu approprié lorsqu'elle n'est pas utilisée.

Cela permet en outre la conception de machines de distribution de boisson de petites tailles pour un usage aux domiciles des consommateurs. En particulier cette dernière décennie, de nombreuses machines de distribution de boisson autonomes de type tireuse à bière ont été conçues et permettent à chaque foyer de disposer chez soi d'une bière pression de qualité en préservant tous les arômes et la fraicheur de la bière, la bière étant conditionnée dans des mini-fûts de cinq ou six litres, par exemple.

Certaines de ces tireuses à bières utilisent de manière autonome des fûts pressurisés et sont capables de mesurer le niveau de bière restant dans le fût par pesage dudit fût. Sur ces machines, le fût est positionné de manière verticale ou légèrement inclinée dans une chambre de refroidissement et une jauge de contrainte est située dans le fond de la chambre de refroidissement et reçoit en appui le fond du fut, la déformation de la jauge de contrainte permettant de connaître la masse du fût et ainsi de déduire la quantité de bière restante dans le fût.

D'autres de ces tireuses à bière utilisent de manière autonome des fûts non pressurisés qui requièrent une pompe sur la tireuse pour assurer la mise en pression du fût et assurer le soutirage de la bière. Sur ces machines, le fût est positionné de manière horizontale ou légèrement inclinée dans une chambre de refroidissement, ce qui complexifie considérablement l'installation dans cette chambre de refroidissement d'une jauge de contrainte sous le fût, raison pour laquelle ce type de tireuse ne permettent pas de mesurer la quantité de bière restante dans le fût.

### Exposé de l'invention

L'invention a pour objectif de concevoir une machine de distribution de boisson fonctionnant de manière autonome et permettant de mesurer la quantité de boisson restante dans le contenant de boisson, quel que soit le positionnement dudit contenant de boisson sur ladite machine de distribution de boisson. Un autre objectif est d'éviter toute perturbation sur la mesure de la quantité de boisson restante dans le contenant de boisson, durant l'usage de la machine de distribution de boisson.

A cet effet, l'invention concerne une machine de distribution de boisson, laquelle comporte une chambre de réception d'un fût formant une recharge de boisson et un dispositif de soutirage de la boisson contenue dans le fût. On entend par « fût », un fût en tant que tel mais aussi tout autre contenant capable de contenir la boisson et d'être placé dans la chambre de réception en vue du soutirage de la boisson, par exemple une poche souple. La machine de distribution de boisson comprend des pieds sur lesquels elle repose. En outre, la machine de distribution de boisson comporte un circuit de commande comprenant un système de mesure d'une quantité restante de boisson dans le fût. Selon l'invention, le système de mesure d'une quantité restante de boisson dans le fût comporte un capteur de poids agencé dans uniquement un pied placé à l'opposé du dispositif de soutirage. L'agencement d'un capteur de poids dans un pied placé à l'opposé du dispositif de soutirage permet de s'affranchir de la manière dont le fût est placé dans la chambre de réception, ce qui permet avantageusement de concevoir des machines de distribution de boisson selon l'invention avec une chambre de réception conçue pour placer le fût soit verticalement ou avec une légère inclinaison par rapport à la verticale, soit horizontalement ou avec une légère inclinaison par rapport à l'horizontale. En outre, le placement d'un capteur de poids dans un pied à l'opposé du dispositif de soutirage évite toute influence du dispositif de soutirage sur la mesure du poids, cette influence pouvant notamment provenir durant l'activation et l'arrêt du dispositif de soutirage qui est manipulé par le consommateur, perturbant ainsi les mesures.

Selon la machine de distribution de boisson objet de l'invention, la chambre de réception sera de préférence équipée d'un dispositif de refroidissement du fût, ce qui permet de servir une boisson fraiche, notamment lorsqu'il s'agit d'une bière. D'autres dispositifs de refroidissement peuvent cependant être envisagés sur la machine de distribution, par exemple en refroissant la boisson qui circule dans un conduit durant son soutirage du fût. D'autres variantes de la machine de distribution de boisson peuvent ne comporter aucun dispositif de refroidissement lorsque la boisson distribuée n'a pas besoin d'être rafraichie, voire même comporter un dispositif de réchauffement s'il est préférable de consommer la boisson tiède ou chaude.

Selon la machine de distribution de boisson objet de l'invention, le dispositif de soutirage comprend un robinet muni d'un bec verseur et un organe d'ouverture et de fermeture du robinet. Dans le cas d'une tireuse à bière, l'organe d'ouverture et de fermeture du robinet est généralement un levier. On pourrait toutefois prévoir un bouton poussoir ou d'autres variantes. Le fût de boisson peut être pressurisé, dans quel cas l'ouverture du robinet permet à elle seule le soutirage de la boisson. Au contraire, le fût de boisson peut être non pressurisé, dans quel cas le dispositif de soutirage comprend de préférence un organe de pressurisation du fût pour permettre le soutirage de la boisson lors de l'ouverture du robinet. Le soutirage de la boisson pourrait aussi se faire simplement par gravité, selon le type de boisson et l'agencement du contenant de boisson dans la chambre de réception.

Selon l'invention, la machine de distribution de boisson objet de l'invention comporte un pied unique agencé à l'opposé du dispositif de soutirage, le système de mesure d'une quantité restante de boisson comportant un seul capteur de poids agencé dans le pied unique disposé à l'opposé du dispositif de soutirage. Cela permet de réduire le coût de conception de la machine de distribution de boisson.

Selon une réalisation de la machine de distribution de boisson objet de l'invention, le capteur de poids comporte une jauge de contrainte agencée sur un corps métallique qui subit une déformation sous l'action du poids de la machine de distribution de boisson. De préférence, selon cette réalisation, le système de mesure d'une quantité restante de boisson comporte une butée de limitation de la déformation du corps métallique. Cette butée permet de conserver une déformation dans le domaine élastique de la jauge de contrainte, sans atteindre le domaine plastique, ce qui aurait pour incidence d'introduire une erreur statique de la mesure réalisée.

Selon une réalisation de la machine de distribution de boisson objet de l'invention, le système de mesure d'une quantité restante de boisson comporte une mémoire dans laquelle est stockée un abaque de correspondance entre le poids mesuré et la quantité restante de boisson. Le soutirage de la boisson contenue dans le fût peut engendrer un déplacement du centre de gravité durant ledit soutirage, ce qui peut induire une erreur de lecture du poids étant donné que la mesure du poids est partielle sur la machine, du fait du positionnement du capteur de poids uniquement sur le pied disposé à l'opposé du dispositif de soutirage. La réalisation d'un abaque en procédant à des essais sur une machine test permet d'inclure cette erreur de lecture dans le software de la mémoire et ainsi d'améliorer la précision de lecture, l'abaque permettant de connaître à tout instant la quantité de liquide dans le fût.

Selon une réalisation de la machine de distribution de boisson objet de l'invention, le système de mesure d'une quantité restante de boisson est configuré pour valider une mesure de poids après une période stable de mesure supérieure à cinq secondes. Lors de l'utilisation du dispositif de soutirage, les contraintes sur le capteur de poids changent, ce qui fausse la lecture de la quantité de boisson restant dans le fût. Pour ne comptabiliser que les variations de contraintes dues au vidage du fût et obtenir une meilleure justesse du résultat, il est important de prendre en compte ces variations uniquement lorsqu'elles sont stabilisées au-delà d'une durée qui est de préférence choisie à cinq secondes.

Selon une réalisation de la machine de distribution de boisson objet de l'invention, le système de mesure d'une quantité restante de boisson comporte un dispositif d'affichage de la quantité restante de boisson. Le dispositif d'affichage pourra par exemple indiquer précisément la valeur numérique en litre ou en centilitre du volume de boisson restant dans le fût. En variante, le dispositif d'affichage peut comprendre des barrettes de graduation représentatives du volume de boisson restant dans le fût. L'information sur la quantité de boisson restante dans le fût pourrait aussi être remontée à l'utilisateur via une interface machine visuelle et/ou tactile et/ou sonore, voire transmise à un objet connecté de type smartphone ou tablette informatique via des moyens de communication sans fil tels que, par exemple, de la radiofréquence de type Bluetooth^{®}, Wifi^{®} ou autre.

Selon une réalisation, la machine de distribution de boisson objet de l'invention comporte deux pieds agencés à l'avant de ladite machine de distribution de boisson, à proximité du dispositif de soutirage. Cela permet d'assurer une bonne stabilité à la machine et réduit fortement les risques de perturbation du capteur de poids durant la manipulation du dispositif de soutirage.

Selon une réalisation de la machine de distribution de boisson objet de l'invention, la chambre de réception est apte à recevoir un fût présentant une forme cylindrique et s'étendant selon un axe horizontal lorsque ledit fût est installé dans ladite chambre de réception, le fût comportant une première extrémité agencée à proximité du dispositif de soutirage de la boisson et une deuxième extrémité agencée à proximité de l'au moins un capteur de poids. D'autres variantes sont envisageables dans le cadre de l'invention, notamment en prévoyant une chambre de réception apte à recevoir un fût présentant une forme cylindrique et s'étendant selon un axe vertical lorsque ledit fût est installé dans ladite chambre de réception.

Selon une réalisation de la machine de distribution de boisson objet de l'invention, la chambre de réception est apte à recevoir un fût comportant une enveloppe externe rigide et une enveloppe interne souple qui contient la boisson. En outre, ladite machine de distribution de boisson comporte un système de mise en pression du fût qui comprend une pompe d'injection d'air entre les enveloppes interne et externe dudit fût.

Selon une réalisation de la machine de distribution de boisson objet de l'invention, le pied agencé à l'opposé du dispositif de soutirage et recevant le capteur de poids comprend un plot de contact agissant sur ledit capteur de poids et un capot comprenant un orifice de passage qui reçoit le plot de contact et empêche les déplacements dudit plot dans un plan dudit orifice. En d'autres termes, l'orifice de passage est légèrement supérieur à la section du plot de contact, ce qui permet de laisser le plot de contact libre de se déplacer dans le sens de son axe longitudinal, c'est-à-dire dans le sens de l'épaisseur de l'orifice de passage, tandis que les déplacements du plot de contact sont bloqués dans un plan perpendiculaire à l'axe longitudinal dudit plot de contact, c'est-à-dire dans le plan de l'orifice de passage. Cela permet d'éviter de perturber le fonctionnement du capteur de poids et d'engendrer des erreurs statiques des mesures, lesquelles pourraient être occasionnées en déplaçant par glissement la machine de distribution de boisson sur son support.

### Brève description des figures

Les caractéristiques et avantages de l'invention apparaîtront à la lecture de la description suivante s'appuyant sur des figures, parmi lesquelles :
[Fig. 1] La figure 1 illustre une vue de côté d'une réalisation d'une machine de distribution de boisson constitué d'une tireuse à bière ;
[Fig. 2] La figure 2 illustre une vue de côté en coupe de la machine de distribution de boisson de la figure 1 ;
[Fig. 3] La figure 3 illustre une vue de dessous de la figure 1 ;
[Fig. 4] La figure 4 illustre un socle d'un pied destiné à recevoir un capteur de poids ;
[Fig. 5] La figure 5 illustre un plot de contact placé dans un capot, deux éléments d'un pied destiné à recevoir un capteur de poids ;
[Fig. 6] La figure 6 illustre selon un premier angle de vue, un carter recevant le capteur de poids et le plot de contact de la figure 5 ;
[Fig. 7] La figure 7 illustre selon un second angle de vue, le carter de la figure 6 recevant le capteur de poids et le plot de contact ;
[Fig. 8] La figure 8 illustre de côté le carter des figures 6 et 7 recevant le capteur de poids et le plot de contact ;
[Fig. 9] La figure 9 illustre une réalisation du capteur de poids comprenant une pièce métallique et une jauge de contrainte montée sur cette pièce métallique ;
[Fig. 10] La figure schématise le système de mesure de la quantité de boisson restante dans le contenant, mis en œuvre sur la machine de distribution de boisson.

### Description détaillée de l'invention

Dans la suite de la description, sauf indication, le terme « machine » est utilisé pour désigner la machine de de distribution de boisson objet de l'invention.

Les termes « supérieur », « inférieur », « haut », « bas », « avant », « arrière », « latéral », « vertical », « horizontal », etc. qui pourraient être utilisés dans la présente description, le seront en considération de la position normale des éléments de la machine placée dans une configuration fonctionnelle sur un plan de table ou de support horizontal, le dispositif de soutirage de la machine étant placé face à l'utilisateur.

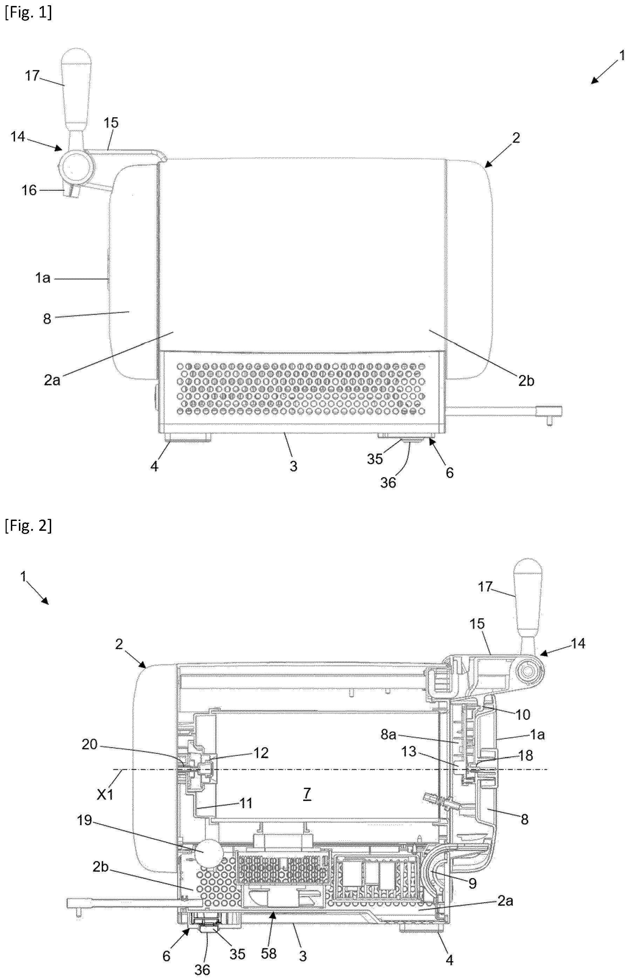

En regard des figures 1 à 3, la machine 1 comprend un bâti 2 muni d'une semelle 3 qui comprend des pieds destinés à être posés sur un plan horizontal, notamment un plan de table ou de support. Selon cette réalisation des figures 1 à 3, la semelle 3 comprend deux pieds avant 4, 5 disposés en partie avant 2a du bâti 2 et un pied arrière 6 disposé en partie arrière 2b du bâti 2. Les pieds avant 4, 5 sont décalés latéralement et le pied arrière 6 est central vis-à-vis du plan médian du bâti 2, ce qui assure une bonne répartition des appuis et ainsi une stabilité de la machine 1. La machine 1 comprend également une chambre de réception 7 dans laquelle peut être placé un fût (non illustré sur les figures) pour la recharge de boisson. Selon cette réalisation des figures 1 à 3, la chambre de réception 7 présente une forme cylindrique avec un axe longitudinal X1 qui s'étend horizontalement, ce qui permet la réception d'un fût cylindrique dans une position allongée, c'est-à-dire avec l'axe de révolution du fût disposé horizontalement et de manière coaxiale à l'axe longitudinal X1 lorsqu'il est logé dans la chambre de réception 7. L'introduction du fût dans la chambre de réception 7 s'effectue par la face avant 1a de la machine 1 qui comporte à cet effet une porte étanche 8 articulée à pivotement sur le bâti 2 grâce à une charnière 9, ladite porte étanche 8 étant maintenue fermée grâce à un organe de verrouillage 10.

Selon cet exemple des figures 1 à 3, la machine 1 est conçue pour recevoir des fûts comportant une enveloppe externe rigide et une enveloppe interne souple qui contient la boisson. Pour cela, comme l'illustre la figure 2, le fond 11 de la chambre de réception 7 comprend un premier connecteur mâle 12 et la porte étanche 8 comprend sur son côté interne 8a un second connecteur mâle 13. Lorsque le fût est placé dans la chambre de réception 7 et que la porte étanche 8 est fermée, le premier connecteur mâle 12 s'embroche sur un premier connecteur femelle agencé sur l'enveloppe externe rigide à une extrémité arrière du fût et le second connecteur mâle 13 s'embroche sur un second connecteur femelle agencé sur l'enveloppe interne souple à une extrémité avant dudit fût, ledit fût étant ainsi mis en perce.

En regard des figures 1 à 3, la machine 1 comprend un dispositif de soutirage 14 qui est agencé en face avant 1a de ladite machine 1. Ce dispositif de soutirage 14 comprend un robinet 15 muni d'un bec verseur 16 et un levier 17 permettant l'ouverture et la fermeture du robinet 15. Le second connecteur mâle 13 est raccordé au robinet 15 au moyen d'un conduit 18 (seule l'extrémité est visible sur la figure 2), l'ouverture du robinet 15 par l'actionnement du levier 17 permettant de soutirer la boisson contenue dans le fût. Afin de permettre ce soutirage de la boisson lors de l'ouverture du robinet 15, l'enveloppe externe rigide du fût doit être mise sous pression en injectant de l'air dans celle-ci grâce à une pompe 19 agencée à l'intérieur du bâti 2 et étant raccordée au premier connecteur mâle 12 par un conduit 20 (seule l'extrémité est visible sur la figure 2).

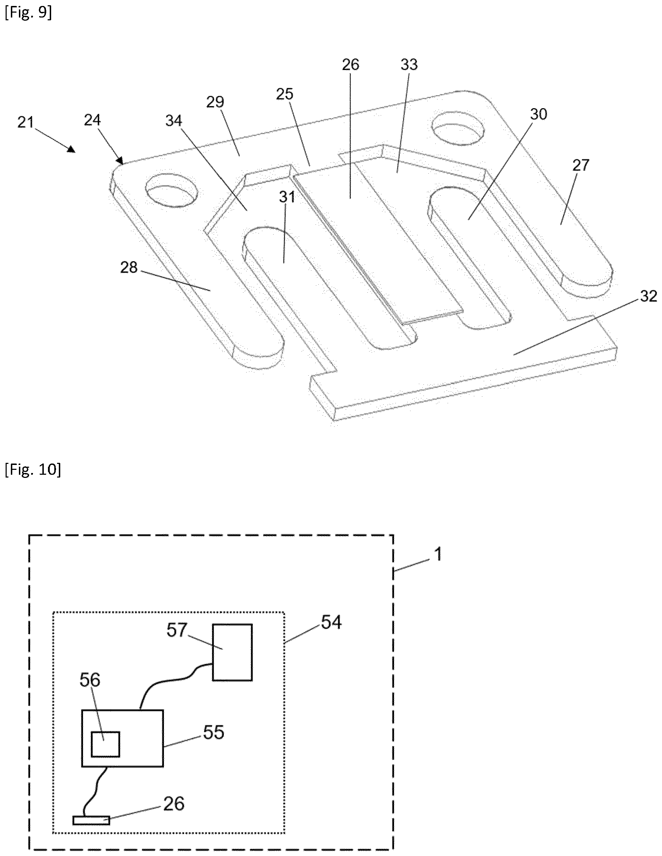

En regard des figures 1 à 3, les pieds avant 4, 5 sont statiques, tandis que le pied arrière 6 est dynamique en ce sens que ledit pied arrière 6 est conçu pour se déformer en fonction de la quantité de boisson restante dans le fût, celle-ci diminuant au fur et à mesure du soutirage de la boisson, ce qui va réduire le poids total de la machine 1 incorporant ledit fût se vidant à chaque soutirage. L'actionnement du levier 17 lors de l'ouverture et de la fermeture du robinet 15 peut engendrer des efforts sur la machine 1, ces efforts étant plus importants sur la partie avant 2a du bâti 2 que sur sa partie arrière 2b étant donné le positionnement dudit dispositif de soutirage 14 en partie avant 1a de la machine 1. Ainsi, les déformations du pied arrière 6 sont moins impactées par l'actionnement du levier 17 lors du soutirage de la boisson et permettent donc une retranscription précise de la variation de la quantité de boisson restante dans le fût. Cette retranscription est obtenue au moyen d'un système de mesure 54 de la quantité de boisson restante dans le fût qui comprend un capteur de poids 21 (figure 9) agencé dans le pied arrière 6, comme cela va être détaillé dans la suite de la description.

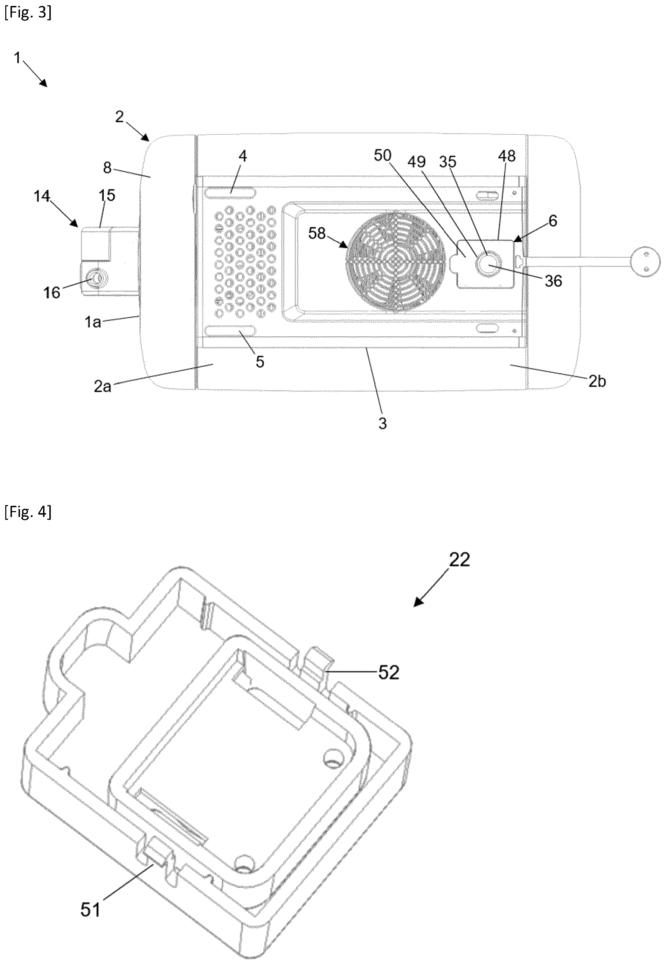

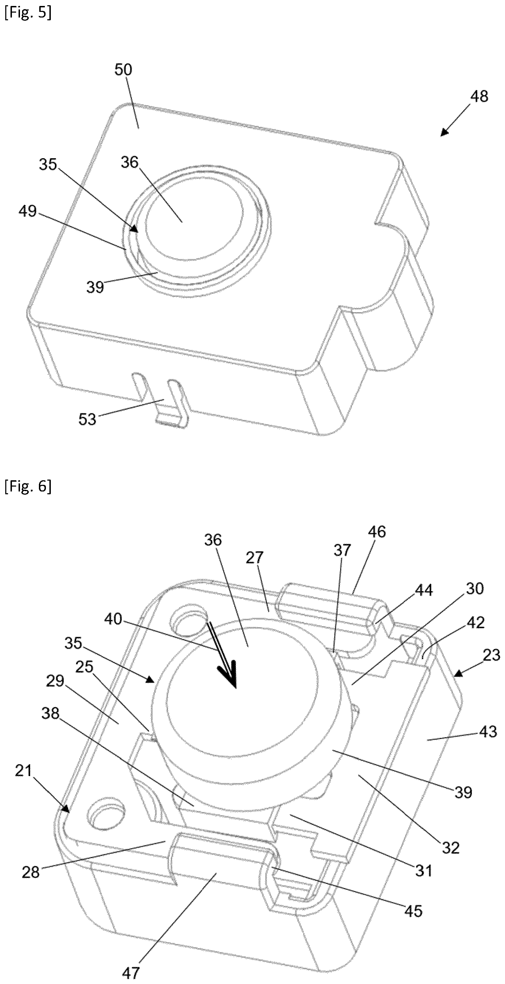

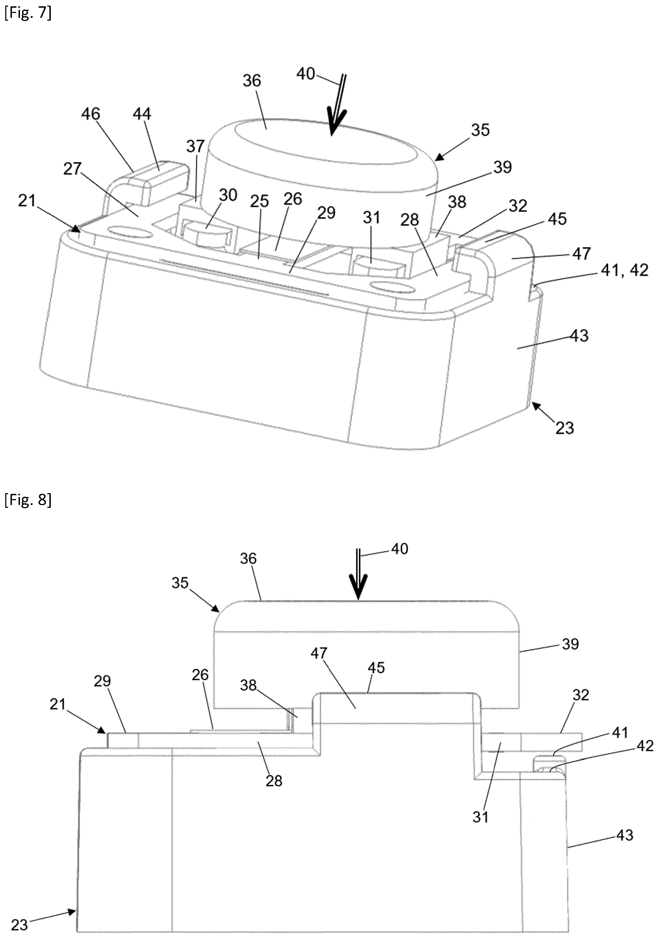

En regard des figures 2 et 4 à 9, le pied arrière 6 comprend un socle 22 (figure 4) qui est fixé en-dessous de la semelle 3 sur le bâti 2. Ce socle 22 reçoit un carter 23 (figures 6 à 8) avec lequel il est assemblé. Ce carter 23 reçoit le capteur de poids 21 qui comporte une pièce métallique 24, sur une branche centrale 25 de laquelle est agencée une jauge de contrainte 26 s'étendant sur la longueur de ladite branche centrale 25. La pièce métallique 24 comprend deux branches latérales externes 27, 28 reliées par un premier pont 29 qui participe à la fixation de la pièce métallique 24 avec le carter 23 et le socle 22. La pièce métallique 24 dispose également de deux branches latérales internes 30, 31 reliées par un deuxième pont 32 et disposées en sens inverse aux deux branches latérales externes 27, 28, lesdites branches latérales internes 30, 31 étant respectivement logées dans les creux 33, 34 formés entre les branches latérales externes 27, 28 et la branche centrale 25, ladite branche centrale 25 reliant le premier pont 29 au second pont 32.

En regard des figures 5 à 9, le pied arrière 6 comprend un plot de contact 35 dont une face inférieure 36 vient en appui sur le support de la machine 1. Ce plot de contact 35 comprend deux pattes 37, 38 qui sont encliquetées respectivement sur les deux branches latérales internes 30, 31, le corps 39 du plot de contact 35 étant placé en-dessous de la jauge de contact 26. Lorsque la machine 1 est posée sur son support, le plot de contact 35 exerce un effort sur les deux branches latérales internes 30, 31 dans le sens de la flèche 40, ce qui déforme la pièce métallique 24 et ainsi la jauge de contrainte 26 placée sur la branche centrale 25.

Afin de limiter les déformations de la jauge de contrainte 26 et de demeurer ainsi dans le domaine élastique, c'est-à-dire ne pas déformer en permanence (domaine plastique) ladite jauge de contrainte 26 au point d'engendrer une erreur de mesure permanente, la course vers le bas du second pont 32 est limitée par une butée 41 agencée sur le rebord supérieur 42 du contour 43 du carter 23 et, inversement, les courses vers le haut des branches latérales externes 27, 28 sont limitées par deux butées latérales 44, 45 formées par deux doigts 46, 47 en forme d'équerre disposés en regard sur le contour 43 du carter 23, comme l'illustrent les figures 6 à 8.

Le pied arrière 6 comprend également un capot 48 (figure 5) qui comporte un orifice de passage 49 dont le diamètre est légèrement supérieur au diamètre du corps 39 du plot de contact 35 qui passe au travers dudit orifice de passage 49 pour que sa face inférieure 36 puisse venir en appui sur le support de la machine 1. Cette légère différence de diamètre entre le corps 39 et l'orifice de passage 49 permet de limiter les déplacements du plot de contact 35 dans un plan définit par la face inférieure 50 du capot 48 disposant dudit orifice de passage 49, notamment lorsque l'utilisateur déplace la machine 1 en la faisant glisser sur son support. Le capot 48 est assemblé avec le socle 22 par encliquetage grâce à deux pattes 51, 52 sur le socle 22 et respectivement deux pattes 53 (une seule est visible sur la figure 5) sur le capot 48.

En regard du schéma de la figure 10, le système de mesure 54 comprend une carte de commande électronique 55 qui comporte un microprocesseur 56, lequel récupère les données relatives à la déformation de la jauge de contrainte 26 et en déduit le poids total de la machine 1 incorporant le fût, le calcul du poids se faisant par exemple comme sur les systèmes de pesée traditionnels utilisant des jauges de contrainte comparables. Le microprocesseur 56 comporte une mémoire dans laquelle est stockée un abaque de correspondance entre le poids mesuré et la quantité restante de boisson dans le fût. L'utilisation d'un abaque permet de connaître à tout instant la quantité de liquide dans le fût en prenant en considération le déplacement du centre de gravité dû au soutirage de la boisson dans le fût qui se vide, la variation du centre de gravité ayant une incidence importante sur la répartition du poids.

Pendant le soutirage de la boisson les contraintes changent, ce qui fausse la lecture du niveau de boisson restante dans le fût. Pour ne comptabiliser que les variations de contraintes dues au vidage du fût, le microprocesseur 56 est programmé pour prendre en compte ces variations uniquement lorsqu'elles sont comprises entre une valeur minimum permettant d'exclure les petites variations dues à l'environnement et une valeur maximum permettant d'exclure les grandes variations dues la manipulation du levier 17. Cette valeur maximum peut par exemple correspondre au débit constant de boisson, cela signifiant que les variations ne sont pas dues au vidage du fût lorsqu'elles sont supérieures à cette valeur maximum. Le microprocesseur 56 est programmé pour valider la mesure du poids après une période stable, c'est-à-dire sans variation importante de la mesure pendant cette période, qui est de préférence choisie à cinq secondes (5 secondes), ce qui assure une meilleure justesse du résultat.

La carte de commande électronique 55 transmet la mesure de la quantité de boisson restante dans le fût à un afficheur numérique 57 qui indique le volume de boisson restante dans le fût, par exemple en litre, en décilitre ou en centilitre. L'afficheur numérique pourrait aussi indiquer des barrettes représentatives du niveau de boisson restant dans le fût, le nombre de barrettes diminuant à mesure que le fût se vide. Le microprocesseur 56 pourrait aussi être programmé pour que l'afficheur numérique 57 clignote tant que la mesure du poids n'est pas stable, afin de ne pas indiquer de quantité fausse sur l'afficheur numérique 57.

La description qui précède de la machine 1 à l'appui des figures 1 à 10 n'est pas limitative, d'autres variantes de machine 1 étant envisageables sans sortir du cadre de l'invention. Il est notamment possible de prévoir une variante de la machine 1 avec deux pieds arrière semblables au pied arrière 6 décrit précédemment et écartés l'un de l'autre en partie arrière 2b du bâti 2, avec un écartement semblable à celui des deux pieds avant 4, 5, les deux pieds arrière recevant chacun un capteur de poids 21 tel que décrit précédemment. Cela permettrait au microprocesseur 56 d'affiner la mesure du poids, mais augmenterait le coût de fabrication de la machine 1. On pourrait aussi envisager une machine 1 avec deux pieds avant 4, 5 et deux pieds arrière, seul un des deux pieds arrière correspondant au pied arrière 6 décrit précédemment et recevant un capteur de poids 21, l'autres des deux pieds arrière étant semblable aux pieds avant 4, 5.

Selon une autre variante, il est possible de concevoir une machine 1 sans premier connecteur mâle 12 et sans pompe 19, une telle machine permettant le soutirage de la boisson mise dans des fûts déjà sous pression. On pourrait aussi envisager un fût constitué simplement d'une poche souple contenant la boisson, dans une variante de la machine 1.

De préférence, la machine 1 comprend un dispositif de refroidissement 58 (figures 2 et 3) permettant de réfrigérer la chambre de réception 7, cela étant indispensable pour une tireuse à bière afin de servir des bières à bonne température de l'ordre de quatre à huit degrés Celsius (4°C à 8°C) selon le type de bière consommée. A cet effet, le dispositif de refroidissement sur la machine 1 pourrait comporter un système de réglage de la température de refroidissement de la chambre de réception 7 qui comportera un clavier accessible sur le bâti 2 et permettant de régler la valeur de la température de refroidissement de la bière. D'autres machine 1 selon l'invention pourraient ne comporter aucun dispositif de refroidissement, lorsque la boisson ne nécessite pas d'être rafraîchie.

Des variantes de la machine 1 peuvent aussi comprendre une chambre de réception cylindrique dont l'axe longitudinal est positionné verticalement, le fût étant également positionné à la verticale dans la chambre de réception.

La carte de commande électronique 55 pourrait comporter un module de transmission lui permettant de communiquer avec un objet connecté de type smartphone ou tablette informatique via un réseau de communication sans fil tels que, par exemple, de la radiofréquence de type Bluetooth^{®} ou Wifi^{®}.

La machine 1 est de préférence conçue pour recevoir des fûts de boisson d'une contenance de cinq ou six litres, pour des tireuses à bière à domicile.

## Revendications

1. Machine de distribution de boisson (1) comportant une chambre de réception (7) d'un fût formant une recharge de boisson et un dispositif de soutirage (14) de la boisson contenue dans le fût, ledit dispositif de soutirage (14) étant manipulé par le consommateur, ladite machine de distribution de boisson (1) reposant sur des pieds (4, 5, 6) et comportant un circuit de commande comprenant un système de mesure d'une quantité restante de boisson dans le fût, le système de mesure d'une quantité restante de boisson comportant au moins un capteur de poids (21) agencé dans uniquement au moins un ou des pieds (6) placés à l'opposé du dispositif de soutirage (14), **caractérisée en ce qu'**elle comporte un pied (6) unique agencé à l'opposé du dispositif de soutirage (14), le système de mesure d'une quantité restante de boisson comportant un seul capteur de poids (21) agencé dans le pied (6) unique placé à l'opposé du dispositif de soutirage (14).

2. Machine de distribution de boisson (1) selon la revendication 1, **caractérisée en ce que** l'au moins un capteur de poids (21) comporte une jauge de contrainte (26) agencée sur un corps métallique (25) qui subit une déformation sous l'action du poids de la machine de distribution de boisson (1).

3. Machine de distribution de boisson (1) selon la revendication 2, **caractérisée en ce que** le système de mesure d'une quantité restante de boisson comporte une butée (41, 44, 45) de limitation de la déformation du corps métallique (25).

4. Machine de distribution de boisson (1) selon l'une quelconque des revendications 1 à 3, **caractérisée en ce que** le système de mesure d'une quantité restante de boisson comporte une mémoire dans laquelle est stockée un abaque de correspondance entre le poids mesuré et la quantité restante de boisson.

5. Machine de distribution de boisson (1) selon l'une quelconque des revendications 1 à 4, **caractérisée en ce que** le système de mesure d'une quantité restante de boisson valide une mesure de poids après une période stable de mesure supérieure à cinq secondes.

6. Machine de distribution de boisson (1) selon l'une quelconque des revendications 1 à 5, **caractérisée en ce que** le système de mesure d'une quantité restante de boisson comporte un dispositif d'affichage (57) de la quantité restante de boisson.

7. Machine de distribution de boisson (1) selon l'une quelconque des revendications 1 à 6, **caractérisée en ce qu'**elle comporte deux pieds (4, 5) agencés à l'avant de ladite machine de distribution de boisson (1), à proximité du dispositif de soutirage (14).

8. Machine de distribution de boisson (1) selon l'une quelconque des revendications 1 à 7, **caractérisée en ce que** la chambre de réception (7) est apte à recevoir un fût présentant une forme cylindrique qui s'étend selon un axe horizontal (X1) lorsque le fût est installé dans ladite chambre de réception, le fût comportant une première extrémité agencée à proximité du dispositif de soutirage de la boisson et une deuxième extrémité agencée à proximité de l'au moins un capteur de poids (21).

9. Machine de distribution de boisson (1) selon l'une quelconque des revendications 1 à 8, **caractérisée en ce que** la chambre de réception (7) est apte à recevoir un fût comportant une enveloppe externe rigide et une enveloppe interne souple qui contient la boisson et **en ce que** la machine de distribution de boisson (1) comporte un système de mise en pression du fût qui comprend une pompe (19) d'injection d'air entre les enveloppes interne et externe du fût.

10. Machine de distribution de boisson (1) selon l'une quelconque des revendications 1 à 9, **caractérisée en ce que** l'au moins un pied (6) agencé à l'opposé du dispositif de soutirage (14) et recevant l'au moins un capteur de poids (21) comprend un plot de contact (35) agissant sur ledit capteur de poids (21) et un capot (48) comprenant un orifice de passage (49) qui reçoit le plot de contact (35) et empêche les déplacements dudit plot de contact dans un plan dudit orifice de passage (49).

## Patentansprüche

1. Getränkeausgabeautomat (1), der eine Aufnahmekammer (7) für ein Fass, das eine Getränkenachfüllung bildet, und eine Zapfvorrichtung (14) für das in dem Fass enthaltene Getränk umfasst, wobei die Zapfvorrichtung (14) vom Verbraucher bedient wird, wobei der Getränkeausgabeautomat (1) auf Füßen (4, 5, 6) ruht und eine Steuerschaltung umfasst, die ein System zum Messen einer im Fass verbleibenden Getränkemenge umfasst, wobei das System zum Messen einer verbleibenden Getränkemenge mindestens einen Gewichtssensor (21) umfasst, der in nur mindestens einem Fuß oder Füßen (6) angeordnet ist, die der Zapfvorrichtung (14) gegenüberliegend platziert sind, **dadurch gekennzeichnet, dass** er einen einzigen Fuß (6) umfasst, der der Zapfvorrichtung (14) gegenüberliegend angeordnet ist, wobei das System zum Messen einer verbleibenden Getränkemenge einen einzigen Gewichtssensor (21) umfasst, der in dem einzigen Fuß (6) angeordnet ist, der der Zapfvorrichtung (14) gegenüberliegend platziert ist.

2. Getränkeausgabeautomat (1) nach Anspruch 1, **dadurch gekennzeichnet, dass** der mindestens eine Gewichtssensor (21) einen Dehnungsmessstreifen (26) umfasst, der an einem Metallkörper (25) angeordnet ist, welcher unter der Wirkung des Gewichts des Getränkeausgabeautomaten (1) eine Verformung erfährt.

3. Getränkeausgabeautomat (1) nach Anspruch 2, **dadurch gekennzeichnet, dass** das System zum Messen einer verbleibenden Getränkemenge einen Anschlag (41, 44, 45) zur Begrenzung der Verformung des Metallkörpers (25) umfasst.

4. Getränkeausgabeautomat (1) nach einem der Ansprüche 1 bis 3, **dadurch gekennzeichnet, dass** das System zum Messen einer verbleibenden Getränkemenge einen Speicher umfasst, in dem ein Rechenschieber für die Entsprechung zwischen dem gemessenen Gewicht und der verbleibenden Getränkemenge gespeichert ist.

5. Getränkeausgabeautomat (1) nach einem der Ansprüche 1 bis 4, **dadurch gekennzeichnet, dass** das System zum Messen einer verbleibenden Getränkemenge eine Gewichtsmessung nach einem stabilen Messzeitraum von mehr als fünf Sekunden validiert.

6. Getränkeausgabeautomat (1) nach einem der Ansprüche 1 bis 5, **dadurch gekennzeichnet, dass** das System zum Messen einer verbleibenden Getränkemenge eine Anzeigevorrichtung (57) für die verbleibende Getränkemenge umfasst.

7. Getränkeausgabeautomat (1) nach einem der Ansprüche 1 bis 6, **dadurch gekennzeichnet, dass** er zwei Füße (4, 5) umfasst, die an der Vorderseite des Getränkeausgabeautomaten (1) in der Nähe der Zapfvorrichtung (14) angeordnet sind.

8. Getränkeausgabeautomat (1) nach einem der Ansprüche 1 bis 7, **dadurch gekennzeichnet, dass** die Aufnahmekammer (7) in der Lage ist, ein Fass aufzunehmen, das eine zylindrische Form aufweist, die sich entlang einer horizontalen Achse (X1) erstreckt, wenn das Fass in der Aufnahmekammer installiert ist, wobei das Fass ein erstes Ende, das in der Nähe der Zapfvorrichtung für das Getränk angeordnet ist, und ein zweites Ende umfasst, das in der Nähe des mindestens einen Gewichtssensors (21) angeordnet ist.

9. Getränkeausgabeautomat (1) nach einem der Ansprüche 1 bis 8, **dadurch gekennzeichnet, dass** die Aufnahmekammer (7) in der Lage ist, ein Fass aufzunehmen, das eine starre Außenhülle und eine weiche Innenhülle umfasst, die das Getränk enthält, und dadurch, dass der Getränkeausgabeautomat (1) ein System zur Druckbeaufschlagung des Fasses umfasst, das eine Pumpe (19) zum Einspritzen von Luft zwischen die Innen- und die Außenhülle des Fasses umfasst.

10. Getränkeausgabeautomat (1) nach einem der Ansprüche 1 bis 9, **dadurch gekennzeichnet, dass** der mindestens eine Fuß (6), der der Zapfvorrichtung (14) gegenüberliegend angeordnet ist und den mindestens einen Gewichtssensor (21) aufnimmt, ein Kontaktstück (35), das auf den Gewichtssensor (21) wirkt, und eine Abdeckung (48) umfasst, die eine Durchgangsöffnung (49) umfasst, die das Kontaktstück (35) aufnimmt und Verlagerungen des Kontaktstücks in einer Ebene der Durchgangsöffnung (49) verhindert.

## Claims

1. Machine (1) for dispensing a beverage comprising a chamber (7) for receiving a barrel forming a beverage refill and a device (14) for filling the beverage contained in the barrel, said filling device (14) being handled by the consumer, said machine (1) for dispensing a beverage resting on feet (4, 5, 6) and comprising a control circuit comprising a system for measuring a remaining amount of beverage in the barrel, the system for measuring a remaining amount of beverage comprising at least one weight sensor (21) arranged in only at least one of the feet (6) placed opposite the filling device (14), **characterised in that** it comprises a single foot (6) arranged opposite the filling device (14), the system for measuring a remaining amount of beverage comprising one single weight sensor (21) arranged in the single foot (6) placed opposite the filling device (14).

2. Machine (1) for dispensing a beverage according to claim 1, **characterised in that** the at least one weight sensor (21) comprises a stress gauge (26) arranged on a metal body (25) which undergoes a deformation under the action of the weight of the machine (1) for dispensing a beverage.

3. Machine (1) for dispensing a beverage according to claim 2, **characterised in that** the system for measuring a remaining amount of beverage comprises an abutment (41, 44, 45) for limiting the deformation of the metal body (25).

4. Machine (1) for dispensing a beverage according to any one of claims 1 to 3, **characterised in that** the system for measuring a remaining amount of beverage comprises a memory in which an abacus for matching between the weight measured and the remaining amount of beverage is stored.

5. Machine (1) for dispensing a beverage according to any one of claims 1 to 4, **characterised in that** the system for measuring a remaining amount of beverage validates a weight measurement after a stable measuring period, greater than five seconds.

6. Machine (1) for dispensing a beverage according to any one of claims 1 to 5, **characterised in that** the system for measuring a remaining amount of beverage comprises a device (57) for displaying the remaining amount of beverage.

7. Machine (1) for dispensing a beverage according to any one of claims 1 to 6, **characterised in that** it comprises two feet (4, 5) arranged at the front of said machine (1) for dispensing a beverage, in the proximity of the filling device (14).

8. Machine (1) for dispensing a beverage according to any one of claims 1 to 7, **characterised in that** the receiving chamber (7) is capable of receiving a barrel having a cylindrical shape which extends along a horizontal axis (X1) when the barrel is installed in said receiving chamber, the barrel comprising a first end arranged in the proximity of the device for filling the beverage and a second end arranged in the proximity of the at least one weight sensor (21).

9. Machine (1) for dispensing a beverage according to any one of claims 1 to 8, **characterised in that** the receiving chamber (7) is capable of receiving a barrel comprising a rigid external envelope and a flexible internal envelope which contains the beverage and **in that** the machine (1) for dispensing a beverage comprises a system for pressurising the barrel which comprises a pump (19) for injecting air between the internal and external envelopes of the barrel.

10. Machine (1) for dispensing a beverage according to any one of claims 1 to 9, **characterised in that** the at least one foot (6) arranged opposite the filling device (14) and receiving the at least one weight sensor (21) comprises a contact stud (35) acting on said weight sensor (21) and a cover (48) comprising a passage orifice (49) which receives the contact stud (35) and prevents movements of said contact stud in a plane of said passage orifice (49).
